# EUROPEAN PATENT SPECIFICATION

(11) **EP 1 558 077 B1**
(45) Date of publication and mention of the grant of the patent: **07.06.2006**
(21) Application number: 02774212.1
(22) Date of filing: 04.11.2002
(51) Int. Cl.: A01N 25/00, A01N 25/12, A01N 63/04

(54) **PROCESS FOR MAKING LARVICIDAL EVAPORATION SUPPRESSANT POWDER**
VERFAHREN ZUR HERSTELLUNG EINER LARVIZIDEN PULVERFÖRMIGEN ZUSAMMENSETZUNG MIT VERMINDERTEM DAMPFDRUCK
PROCEDE POUR PRODUIRE DE LA POUDRE DE SUPPRESSION D'EVAPORATION LARVICIDE

(43) Date of publication of application: 03.08.2005
(73) Proprietor: O'Brien, Robert Neville, Victoria, British Columbia V8N 1X5 (CA)
(72) Inventor: O'Brien, Robert Neville, Victoria, British Columbia V8N 1X5 (CA)
(74) Representative: Moy, David
(86) International application number: PCT/CA2002/001728
(87) International publication number: WO 2004/040977

(56) References cited:
- US-A- 6 001 382
- US-B1- 6 303 133

## Description

### BACKGROUND OF THE INVENTION - TECHNICAL FIELD

In general, this invention relates to a specially blended, powdery, larvicidal composition suitable for application to open water catchments to control local mosquito populations, and more especially to the hereinafter described water-free preparation process for making a powder that possesses utility both for abatement of use by mosquitoes of an open water catchment as a successful breeding site, and for conserving water by suppressing the evaporation of water from the same catchment. A further use is for spreading on water or soil with suitable larvicides for other target pests.

A tried-and-proven method of abating the kind of mosquito breeding which is typically localized at a site consisting of an open water catchment is to drain the catchment or procure its drying up, thus depriving egg-laying female mosquitoes of opportunity to use that particular site for breeding. However, whenever conservation of water stored in open catchments is a high priority social objective, a ''drying-the-site" method of mosquito control has to be ruled out. In realistic scenarios, therefore, there would be advantage to devising suitable means capable of simultaneously conserving water and controlling mosquitoes. The powder to be manufactured in accordance with the instant invention will constitute such means for rapid spreading on water and for spreading on moist soil against other pests.

### BACKGROUND OF THE INVENTION - PRIOR ART

The field of mosquito larvicides encompasses a number of variously formulated known toxicological and non-toxicological compositions suitable for application to mosquito breeding waters without rapid means of spreading and water saving properties. Non-toxicological compositions include those known to utilize as a larvicide at least one suitably selected organic compound capable of forming a monomolecular film, or ie., monolayer, on the water catchment surface. The film to be formed in such a case need contain no toxin which kills mosquito larvae, but instead is designed to cause them to sink and drown by so modifying the surface of a catchment that the denser-than-water larvae which normally hang suspended therefrom will be deprived of their usual means of support, viz., surface tension on a ring of hairs surrounding tracheal openings at the upwardly directed, air-snorkeling, rear end of each aquatic mosquito larva.

Concerning the field of water conservation, it is well-known that some although not all organic compounds capable of forming a monolayer on a water surface can be effective as water evaporation suppressants. Since not every kind of monolayer produces a film that is effective for practical water evaporation suppression, it would be factually insupportable to infer that, merely by the formation on mosquito breeding waters of any kind of monolayer whatsoever, that there inherently would result effective water evaporation suppression, always accompanying the intended mosquito control effect. Nor, on the other hand, would it be factually supportable to infer that every formed monolayer that does effectively suppress evaporation of water must inherently be lethal to mosquito larvae.

In 1968, the June issue of Mosquito News published "A FEASIBILITY STUDY ON THE UTILIZATION OF MONOMOLECULAR FILMS FOR MOSQUITO ABATEMENT", wherein Gerald A. Lorenzen and Wilmon M. Meinke reported, among other things, their finding that film-forming cetyl alcohol, ie., n-hexadecanol, which is well-known in surface chemistry to be a compound effective for evaporation suppression use, has no larvicidal effect on the *Culex quinquefasciatus* mosquito species common in Texas.

Lorenzen and Meinke also reported that particles of cetyl alcohol floating on the water surface of test units were observed to be apparently fed upon by mosquito larvae with no ill effect to them. Plausible effect of such feeding behavior upon the surface area coverage capacity of the amount of finely ground film-forming material used received no mention, but it may reasonably be supposed that an individual cetyl alcohol particle ingested by a mosquito larva does not subsequently participate in usual film-spreading and film-repairing processes associated with use of powdered fatty alcohol evaporation suppression. A real prospect thus exists that presence of a high population of actively feeding mosquito larvae at a water catchment site can have a deleterious effect on certain evaporation suppression measures, specifically those wherein a fatty alcohol of high enough carbon number to be solid-phase in finely particulate bulk form is utilized. For an example of a fast film-spreading powder for suppressing water evaporation which contains fatty alcohol particles upon which mosquito larvae may conceivably feed, see United States Patent Number 6,303, 133 B1 (O' Brien).

In 1977, the September issue of Mosquito News published "MOSQUITO CONTROL WITH MONOMOLECULAR ORGANIC SURFACE FILMS: I - SELECTION OF OPTIMUM FILM-FORMING AGENTS", wherein William D. Garrett and Sheldon A. White cited both the above cited report by Lorenzen and Meinke and A. S. Msangi's earlier research-based conclusion (1956) that n-hexadecanol produces no appreciable influence on aquatic larvae of the *Anopheles gambiae* mosquito species common in Africa.

Thus, although a monolayer of cetyl alcohol is known to suppress water evaporation effectively, deficiency of the same film-forming compound for a larvicidal role is also known.

One traceable trend respecting delineation of criteria for optimum materials selection directed to forming monolayers capable of interfering with mosquito breeding diverges in major respects from another traceable trend respecting delineation of criteria for optimum materials selection directed to forming monolayers that effectively suppress evaporation.

Preference for a liquid state for film-forming material in its pre-distribution bulk phase, and for a high fluidity of the formed monolayer on water are two of the several key criteria listed by Garrett and White in the second of the above cited Mosquito News reports which from a physico-chemical standpoint are criteria conducive to larvicidal effectiveness. The same two criteria, unfortunately, tend to be incompatible with effective suppression of water evaporation from an open reservoir, particularly if the film-forming material selected is a normally solid-phase fatty alcohol.

According to a classic surface chemistry textbook INSOLUBLE MONOLAYERS AT LIQUID-GAS INTERFACES by George L. Gaines, Jr. (Interscience Publishers, 1966), high fluidity as a formed monolayer property runs counter to optimum effectiveness at suppressing evaporation. The kind of monolayer that imposes higher resistance (than other kinds) to egress through it of water vapor is the so-called "condensed film" kind of monolayer, featuring close side-by-side packing of upright un-branched molecular chains, sometimes referred to as a "compact" monolayer. Extent of vapor passage resistance increases with chain length, provided the chain is truly linear so that adjacent molecules in a film can be closely packed as in the solid crystal phase.

Fatty alcohols with a carbon number lower than 14 are liquid at standard temperature, and even if un-branched form a film of high fluidity on water, rather than forming the condensed kind of monomolecular film that retards evaporation significantly more effectively. Thus, lauryl alcohol, ie., dodecanol, with 12 carbon atoms per molecule, would not be recommended for optimization of evaporation suppression properties, although it would be selectable for its ability to cause mosquito larvae mortality in the manner reported by Lorenzen and Meinke in the first of the above cited Mosquito News reports.

The discussions of larvicidal agencies present in both above cited Mosquito News reports are predicated on the concept that mosquito breeding at a given open water site can feasibly be abated on a non-toxicological basis by suitably modifying the water surface to prevent normal larval respiration.

Another relevant factor in the background of the instant invention is the known use of biological mosquito larvicides comprising toxin-carrying spores of microbial species, eg., *Bacillus thuringiensis* variety *Israelensis,* and *Bacillus* sphaericus, which shall collectively be referred to hereinafter as 'mosquit-specific entomopathogens', The toxins are specifically lethal to larvae of mosquitoes when the minute *Bacillus* spores are ingested thereby. There exist also publications listing larvicides for many other pests in the entomological literature.

It has also been suggested that a so-called "synergistic" mode of treatment of a mosquito breeding site can be practiced, wherein larvicidal agencies indude both the surface tension reduction by a monolayer that drowns mosquito larvae, and the use of mosquito-specific entomopathogens to poison them. Film-forming compounds recommended for known compositions for carrying out such a "drowning-plus-poisoning" type of larvicidal treatment are compatible with the optimized materials selection criteria proposed in the above cited Garrett and White Mosquito News report, because these are typically branched chain compounds that procure the highly fluid --rather than condensed- kind of monolayer to give more rapid spreading hence more rapid delivery to all parts of the liquid surface to be treated. For a citable example wherein ethoxylated and branched-chain compounds are recommended, see the "Insecticide composition for controlling insects which have an aquatic breeding site" by A. I. McMullen, United States Patent Number 4,707,359 (Nov. 17, 1987). The composition by McMullen is not designed to procure effective evaporation suppression.

Significantly, concerning preparation of formulations according to the McMullen insecticidal monolayer-forming invention, problems that would be encountered if attempting to evenly distribute mosquito-specific entomopathogens within a main body comprising film-forming constituents were easily avoided by the use of water as a dispersion medium during product preparation. Contrastingly, the film-spreading powder of above cited United States Patent Number 6,303,133 B1 (O'Brien) does not lend itself during its preparation process to admixture of its constituents with water, because addition of water during processing would prematurely activate ionization of the slaked lime, ie., calcium hydroxide, that is included to provide a unique, rapid dispersal mechanism that takes effect when the powder is broadcast upon a body of water intended to be coated by an effective evaporation-suppressing monolayer. Without feasibility of using water in the processing, a real problem of how to evenly distribute mosquito-specific entomopathogens within a main body comprising dry particulate film-forming and other constituents arises.

It has already been noted above that the O'Brien patented powder, so long as it places finely divided alcohol particles on a water catchment surface, is susceptible to a number of such particles being ingested by mosquito larvae, if present, thus suffering a loss of reserve film-forming material that would be expected to be of a magnitude proportionate to the number of feeding larvae. Insofar as is known at this time of disclosing the instant invention, nobody has previously suggested the specfic manner of resolving this problem that is presently proposed.

As a final point closing background discussion, it is acknowledged as having already been known in the general art pertaining to insecticides to disperse mosquito-specific entomopathogens in a quantity of liquid-phase lauryl alcohol, ie., dodecanol, which is not a satisfactory evaporation suppressant material, although as far back as 1968 (Lorenzen and Meinke) this 12-carbon fatty alcohol was proposed to be suitable for forming a monomolecular film intended specifically for mosquito abatement use. In US Patent Application Number 09/739,895 (O'Brien), published 20 September 2001 as US Patent Application Publication No. 2001/0022355 (issued 6 May 2003 as US Patent No. 6.558,705), it is stated that when the powder referred to in this application is spread as a powder, then wetted either by rain or irrigation, spreading appears to be rapid on the wet soil.

### BRIEF SUMMARY OF THE INVENTION

One important technical object of the invention is to devise a way to reduce the susceptibility of finely divided fatty alcohol particles to being ingested by mosquito larvae, when such particles are located on the surface of a water catchment infested by the larvae.
Another important technical object of the invention is to devise a water-free mode of processing that distributes particulate mosquito-specific entomopathogens evenly within a quantity of film-spreading powder containing, together with other chemical constituents, finely particulate fatty alcohol, preferably cetyl alcohol, stearyl alcohol, or a blend of these two compounds.

The object of the invention is procurement of a special powder that possesses utility both for abatement of use by mosquitoes of an open water catchment as a successful breeding site, and for conserving water by suppressing the evaporation of water from the same catchment. A further object is the spreading of appropriate larvicides against soil dwelling pests on moist soil.

It has been found that the foregoing objects can substantially be satisfied by making a larvicidal variant of a known hydrated lime-containing "film-spreading powder for suppressing water evaporation" that has previously been described in United States Patent Number 6,303,133 B1 (O'Brien). This variant of that hydrated lime-containing powder is rendered larvicidal by virtue of stirring or otherwise intimately blending a suitable proportion of known mosquito-specific entomopathogens, dispersed in lauryl alcohol, into constituent of the original composition made in accordance with the cited O'Brien patent. Further, any appropriate larvicide for water or soil dwelling pests may also be incorporated and rapidly spread.

It has been found that the foregoing objects can also substantially be satisfied by making a larvicidal variant of an acidified gypsum-containing "composition for reducing evaporation at sites both on land and open water" that is disclosed in United States Patent Application Serial No. 09/739.895 (O' Brien). Equivalently as with the hydrated lime-containing variant, this acidified gypsum-containing variant is rendered larvicidal by virtue of stirring or otherwise intimately blending a suitable proportion of known mosquito-specific entomopathogens, dispersed in lauryl alcohol, into constituents of the original composition made in accordance with the cited O'Brien patent application. Extending this logically to include larvicides for other water or soil dwelling pests is now put forward.

Due to pre-dispersal of mosquito-specific entomopathogens or other pesticides in lauryl alcohol before blending with other constituents, it is surprisingly easy to evenly distribute the entomopathogens throughout the volume of a powdered evaporation suppressing composition, without the use of water in the process..

The resulting product is storable for considerable periods of time in sacks, drums, etc., that can be handled and shipped without a deleterious internal settling and gravitational separation of constituents that would likely occur if the lauryl alcohol were not used and instead only the dry entomopathogenic material, eg. *Bacillus thuringiensis* spores were directly combined with the original dry particulate evaporation suppressant materials.

When the resulting product is broadcast upon the surface of an open water catchment, for example by a crop-dusting type mode of distribution from an aircraft over-flying a reservoir, all the highly desirable effects associated with the unique rapid film spreading ionization-caused particle expulsion achieved in accordance with the disclosures of the above cited O'Brien patent and patent application are retained. The film-spreading and film-repairing processes are the same as for the corresponding composition versions without larvicidal constituents.

A significant limitation to be observed when making the powder of the instant invention is to keep the lauryl alcohol content at a minimal level commensurate to effectively distributing the *Bacillus thuringiensis* spores or equivalent entomopathogenic particulate material with the other normally solid-phase composition constituents, Even though lauryl alcohol is itself normally liquid-phase at standard temperature, when absorbed by sufficient powder of the balance of other constituents it ceases to occur in the end-product as a macroscopic-scale liquid. It is no intention associated with the instant invention to make an oily "sludge" or "slurry" instead of the intentionally devised dry powder, but such an oily and non-particulated result would of course be expected if too high a proportion of lauryl alcohol were used.

The present invention is defined in the claims.

Additional details relating to carrying out the invention follow, starting with review of precursor O'Brien evaporation suppressant powders.

### DETAILED DESCRIPTION OF THE INVENTION

US Patent No. 6,303,133 taught a powdery hydrated lime-containing evaporation suppressant having particles that repel one another during a water-induced ionization process. Prior art had not taught combination of long-chain solid-phase fatty alcohols with hydrated lime, ie., calcium hydroxide. The composition taught in US Patent No. 6,303,133 comprises micropartides of long-chain fatty alcohol and calcium hydroxide, and has been shown upon water induced ionization to enhance the rate of film-spreading on a water surface due to the phenomenon of the particles mutually repelling one another in a manner not apparent in prior art. As already indicated in the BRIEF DESCRIPTION section above, the instant invention by further including a component consisting of mosquito-specific entomopathogens dispersed in lauryl alcohol, contributes a new and previously un-suggested way to reduce the number of solid"phase fatty alcohol particles possibly ingested by mosquito larvae infesting a body of water, while retaining the earlier disclosed phenomenon of mutual particles' repulsion.

Considered and filed as a continuation-in-part of the aforesaid lime-containing composition disclosure, US Pat. Appl. No. 09/739.895 substituted in place of the lime of the parent invention―an "acidified gypsum" component consisting of about 5 millilitres of sulfuric acid per 300 grams of crushed gypsum. Blending unemulsfied detergent range fatty alcohols such as cetyl alcohol and/or-stearyl alcohol with the acidified gypsum produces an effective evaporation suppressant which works on open bodies of water in the same manner as the lime containing parent. As indicated in the BRIEF DESCRIPTION section above, the instant invention, by further including a composition component consisting of known mosquito entomopathogens dispersed in lauryl alcohol, promotes reduction of the number of solid-phase fatty alcohol particles likely ingested by mosquito larvae, while retaining-in the same manner for the acidified gypsum-containing evaporation suppressant as with hydrated lime-containing powder for evaporation suppression-the earlier disclosed phenomenon of mutual particles' repulsion giving rapid spreading. A fact undisclosed before now is that an equivalent component to the acidified gypsum can be made using―in substitution for sulfuric acid- oxalic acid or other di-functional acid with similar magnitude respecting ionization constant and solubility giving even more rapid spreading.

The explanation of spreading enhancement for the self-propelling precursor powder formulations of O'Brien is that "fast" ions ionized on contact of the powder with water leave a net positive charge on particles in the case of lime blended with fatty alcohol, and a net negative charge in the case of acidified gypsum similarly blended. Outdoor pool tests have shown the spreading of such precursor powders across a water surface to spread against a breeze of about 10 km/h, which is much faster than alcohol films spread from fatty alcohol solid-phase particles unblended with ionizable crushed minerals and thus absent the recently discovered and exploited particles repulsion effect.

It is now apparent that enough power is developed to aquatically propel other materials blended into a powder, besides the insoluble fatty alcohol component and the dwindling partly soluble mineral component that "fuels" the propulsion. A variety of additional types of components appears feasible, including fertilizers, fish food, aquatic herbicides, and toxins that are insecticidal by mechanisms other than the biological type involved with use of mosquito-specific entomopathogens. In every case, however, the added substance must be pre-tested for inertness with regard to chemical reaction with the insoluble monolayer former and whichever ionizable crushed material component is used, inertness being needed during both the preparation process and when applied in the field for the end-use.

A composition that meets the main object of providing both water conservation by suppressing evaporation and mosquito control by larvicidal effect is readily manufacturable by a process that basically adds-to the disdosed steps for making the patented precursor evaporation suppressant formulations of O'Brien-a further step for blending in a suitable amount of mosquito-specific entomopathogens predispersed in lauryl alcohol and made into a powder with the above mentioned bulking agents used in the evaporation suppressant powder This step should not be incorporated at the melt-processing stage of making either of the precursor - evaporation suppressant powders, for two reasons: the heat involved would kill the microbial entomopathogens; and undesired loss by volatilization of some of the lauryl alcohol would occur with options next to be described regarding the further blending step, the proportion of larvicidal component relative to evaporation suppressing component can be adjusted higher or lower depending on extent of mosquito larvae infestation and/or need for a pre-determinable amount of evaporation suppression coverage.

One blending option is to absorb into a quantity of one of the precursor evaporation suppressant powders a quantity of pre-mixed dispersion of mosquito-specific entomopathogens in lauryl alcohol. Such a larvicidal dispersion is known to be sprayable as a liquid provided excessive content of entomopathogen spores is avoided so as to preserve a sprayable consistency. In this case the larvicidal component can be incorporated into the precursor powder by spraying the former onto the latter in a proportion within ability of the powder to sufficiently absorb lauryl alcohol so that in the finished product composition it retains no macroscopically liquid character, even though at a temperature above its freezing point. This option lends itself to high volume continuous production of a ready-to-use composition having well balanced properties both for water conservation and mosquito control, and which is especially suitable for marketing to large-scale users expected to treat large public water storage reservoirs or for application to agricultural land or other moist soils with appropriate larvicides against other soil dwelling pests.

The alternative blending option lends itself better to batch-type processing and entails making two powders that may be stockpiled separately until an appropriate need-circumstance is identified that calls for their being blended. Adjustments of the balance between evaporation suppression coverage, on the one hand, and number of mosquito larvae per hectare of water surface anticipated to be killed by ingestion of entomopathogens put amidst them, on the other hand, are in this case left to the product user to make, depending an local circumstances. For clarity, the property of effectively suppressing evaporation of water is possessed exclusively by one of the two powders, and the larvicidal property is possessed exclusively by the other.

A particular pond or rice paddy may for a limited time require some, but comparatively little, use of evaporation suppressant material, and may be more in need of a mosquito larvicide due to being heavily infested. There may be occasion in connection with particular rice cropping practices to allow a paddy to dry out on a definite schedule. Timed reduction of-and ultimate elimination of―use of evaporation suppressant would allow this; but the larvicidal property of the other powder may remain needed until a later date than that at which use of evaporation suppressant should cease. Thus it is logical to have the two blendable powders kept separately for blending as, when, and if desired, thereby accommodating a greater range of use-exigencies. Application to soil will have many variations as the growing season progresses.

It is expected that the relative amount of lauryl alcohol fully absorbable by crushed mineral particles of hydrated lime or acidified gypsum will be somewhat greater when the mineral components have not been previously intimately pre-combined with cetyl alcohol and/or stearyl alcohol in a melt thereof. This means that a highly effective larvicidal powder lacking in evaporation suppression effectiveness is manufacturable by combining the mosquito-specific pathogens, lauryl alcohol, and crushed mineral components, sans presence of cetyl alcohol and/or stearyl alcohol. Such a powder has been developed in order to facilitate end-property adjustments in a preferred composition made by the optional process of blending the two powders as here suggested *viz.,* the one exclusively possessing the larvicidal property; the other exclusively procuring effective evaporation suppression. To here disclose the two blendable powders that can go into a final product capable of use simultaneously for both mosquito control and water conservation, but easily adjustable with respect to relative extent of effectiveness towards those two purposes, cannot help but incidentally also disclose the one of the two blendable powders that is larvicidal only, and may even be used alone in those cases where evaporation suppression is not required. Similar reasoning applies to the use on soil of specially made larvicidal mixtures for use against soil dwelling pests.

Most generally however, in contemplation especially of large-scale continuous production in accordance with the first option for enacting the basic process of the instant invention, it is easy to provide a ready-to-use powder that without requiring tailored blending of two powders by end users will achieve good balance between good evaporation suppression effectiveness and larvicidal effectiveness without tilting extremely one way or the other, merely by adding lauryl alcohol plus mosquito-specific entomopathogens or others to a main body of powder initially comprising one or the other of the precursor evaporation suppressant powders by O'Brien.

It should be apparent at this point that competent workers in the art, after studying all the foregoing new subject matter of the present disclosure, will be armed to carry out the instant invention with no more than routine experimentation needed and/or desired as may be appropriate to end-use circumstances.

## Claims

1. An insecticidal and evaporation suppression product for use on water or land, the product comprising:
a) evaporation-suppressant particles comprising:
i) an ionizable spreading agent selected from the group consisting of hydrated lime and acidified gypsum; and
ii) a fatty alcohol with an un-branched carbon chain of 14 to 24 carbon atoms;
b) lauryl alcohol; and
c) a pesticide dispersed in the lauryl alcohol;
wherein the particles and pesticide-containing lauryl alcohol are blended one with the other to form a powdery product.

2. The product of claim 1, wherein the pesticide is a larvicide.

3. The product of claim 1, wherein the pesticide is a mosquito-spedfic entomopathogen.

4. The product of claim 1, wherein the spreading agent is acidified gypsum and the gypsum is acidified using a di-functional acid.

5. The product of claim 4, wherein the di-functional acid is oxalic acid.

6. A two-component insecticidal and evaporation suppressant product for use on water or land, the product comprising:
a) an evaporation suppressant component comprising particles comprising:
i) an ionizable spreading agent selected from the group consisting of hydrated lime and acidified gypsum; and
ii) a fatty alcohol with an un-branched carbon chain of 14 to 24 carbon atoms; and
b) an insecticidal component comprising
i) an ionizable spreading agent selected from the group consisting of hydrated lime and acidified gypsum;
ii) lauryl alcohol; and
iii) a pesticide dispersed in the lauryl alcohol;
wherein the two components are mixable prior to use, and the relative insecticidal and evaporation-suppressant effectiveness of the mixed components is adjustable by adjusting the proportions of the evaporation suppressant component and the insecticidal component.

7. A process for preparing an insecticidal and evaporation-suppressing powder, comprising the steps of:
a) procuring evaporation-supressant particles comprising:
i) an Ionizable spreading agent selected from the group consisting of hydrated lime and acidified gypsum; and
ii) a fatty alcohol with an un-branched carbon chain of 14 to 24 carbon atoms;
b) dispersing a pesticide in lauryl alcohol;
c) blending the particles with the pesticide-containing lauryl alcohol, without using water as a blending agent.

8. The process of claim 7, further comprising the step of, prior to the step of blending the particles with the pesticide-containing lauryl alcohol, blending the pesticide-containing lauryl alcohol with an ionizable spreading agent selected from the group consisting of hydrated lime and acidified gypsum, without using water as a blending agent, whereby the step of blending the particles with the pesticide-containing lauryl alcohol comprises blending the particles with the blended ionizable spreading agent and pesticide-containing lauryl alcohol.

9. A method for providing both evaporation suppression and insecticidal effects on land or water, the method comprising:
applying to the surface of the land or water a powder comprising:
a) evaporation-suppressant particles comprising:
i) an ionizable spreading agent selected from the group consisting of hydrated lime and acidified gypsum; and
ii) a fatty alcohol with an un-branched carbon chain of 14 to 24 carbon atoms;
b) lauryl alcohol; and
c) a pesticide dispersed in the lauryl alcohol;
wherein the particles and pesticide-containing lauryl alcohol are blended one with the other.

## Patentansprüche

1. Insektizides und die Verdampfung unterdrückendes (verminderndes) Produkt für die Verwendung auf Wasser oder auf Land, wobei das Produkt umfasst:
a) die Verdampfung unterdrückende (vermindernde) Teilchen, die umfassen
i) ein ionisierbares Verteilungs- bzw. Ausbreitungsmittel, ausgewählt aus der Gruppe, die besteht aus gelöschtem Kalk und angesäuertem Gips, und
ii) einen Fettalkohol mit einer unverzweigten Kohlenstoffkette mit 14 bis 24 Kohlenstoffatomen;
b) Laurylalkohol; und
c) ein in dem Laurylalkohol dispergiertes Pestizid;
in dem die Teilchen und der ein Pestizid enthaltende Laurylalkohol miteinander gemischt sind unter Bildung eines pulverförmigen Produkts.

2. Produkt nach Anspruch 1, in dem das Pestizid ein Larvizid ist.

3. Produkt nach Anspruch 1, in dem das Pestizid ein Moskito-spezifisches Entomo(Arthropoden)-Pathogen ist.

4. Produkt nach Anspruch 1, in dem das Verteilungs- bzw. Ausbreitungsmittel angesäuerter Gips ist und der Gips durch Verwendung einer difunktionellen Säure angesäuert worden ist.

5. Produkt nach Anspruch 4, in dem die difunktionelle Säure Oxalsäure ist.

6. Insektizides und die Verdampfung unterdrückendes (verminderndes) ZweiKomponenten-Produkt für die Verwendung auf Wasser oder auf Land, wobei das Produkt umfasst:
a) eine die Verdampfung unterdrückende (vermindernde) Komponente, die Teilchen umfasst, die umfassen:
i) ein ionisierbares Verteilungs- bzw. Ausbreitungsmittel, ausgewählt aus der Gruppe, die besteht aus gelöschtem Kalk und angesäuertem Gips, und
ii) einen Fettalkohol mit einer unverzweigten Kohlenstoffkette mit 14 bis 24 Kohlenstoffatomen, und
b) eine insektizide Komponente, die umfasst
i) ein ionisierbares Verteilungs- bzw. Ausbreitungsmittel, ausgewählt aus der Gruppe, die besteht aus gelöschtem Kalk und angesäuertem Gips,
ii) Laurylalkohol und
iii) ein in dem Laurylalkohol dispergiertes Pestizid,
wobei die beiden Komponenten vor der Verwendung miteinander mischbar sind und die relative insektizide und die Verdampfung unterdrückende (vermindernde) Wirksamkeit der miteinander vermischten Komponenten einstellbar ist durch Einstellung der Mengenverhältnisse zwischen der die Verdampfung unterdrückenden (vermindernden) Komponente und der insektiziden Komponente.

7. Verfahren zur Herstellung eines insektiziden und die Verdampfung unterdrückenden (vermindernden) Pulvers, das die Stufen umfasst:
a) Bereitstellung von die Verdampfung unterdrückenden (vermindernden) Teilchen, die umfassen:
i) ein ionisierbares Verteilungs- bzw. Ausbreitungsmittel, ausgewählt aus der Gruppe, die besteht aus gelöschtem Kalk und angesäuertem Gips, und
ii) einen Fettalkohol mit einer unverzweigten Kohlenstoffkette mit 14 bis 24 Kohlenstoffatomen;
b) das Dispergieren eines Pestizids in Laurylalkohol; und
c) das Vermischen der Teilchen mit dem das Pestizid enthaltenden Laurylalkohol, ohne Verwendung von Wasser als Vermischungsmittel.

8. Verfahren nach Anspruch 7, das außerdem eine Stufe umfasst, in der vor der Stufe des Vermischens der Teilchen mit dem ein Pestizid enthaltenden Laurylalkohol, der ein Pestizid enthaltende Laurylalkohol mit einem ionisierbaren Verteilungs- bzw. Ausbreitungsmittel, ausgewählt aus der Gruppe, die besteht aus gelöschtem Kalk und angesäuertem Gips, vermischt wird ohne Verwendung von Wasser als Vermischungsmittel, sodass das Vermischen der Teilchen mit dem ein Pestizid enthaltenden Laurylalkohol umfasst das Vermischen der Teilchen mit der vorher hergestellten Mischung aus dem ionisierbaren Verteilungs- bzw. Ausbreitungsmittel und dem ein Pestizid enthaltenden Laurylalkohol.

9. Verfahren zur Erzielung von die Verdampfung unterdrückenden (vermindernden) und insektiziden Effekten auf Land oder auf Wasser, wobei das Verfahren umfasst:
das Aufbringen auf die Oberfläche von Land oder von Wasser eines Pulvers, das umfasst:
a) die Verdampfung unterdrückende (vermindernde) Teilchen, die umfassen:
i) ein ionisierbares Verteilungs- bzw. Ausbreitungsmittel, ausgewählt aus der Gruppe, die besteht aus gelöschtem Kalk und angesäuertem Gips, und
ii) einen Fettalkohol mit einer unverzweigten Kohlenstoffkette mit 14 bis 24 Kohlenstoffatomen;
b) Laurylalkohol; und
c) ein in dem Laurylalkohol dispergiertes Pestizid;
worin die Teilchen und der ein Pestizid enthaltende Laurylalkohol miteinander gemischt sind.

## Revendications

1. Produit insecticide et de suppression de l'évaporation pour utilisation sur l'eau ou sur la terre, le produit comprenant :
a) des particules de suppression de l'évaporation comprenant :
i) un agent d'épandage ionisable sélectionné dans le groupe consistant en chaux hydratée et gypse acidifié ; et
ii) un alcool gras à chaîne carbonée non ramifiée contenant de 14 à 24 atomes de carbone ;
b) de l'alcool laurylique ; et
c) un pesticide dispersé dans l'alcool laur ylique ;
dans lequel les particules et l'alcool laurylique contenant le pesticide sont mélangés l'un avec l'autre pour former un produit pulvérulent.

2. Produit selon la revendication 1, dans lequel le pesticide est un larvicide.

3. Produit selon la revendication 1, dans lequel le pesticide est un entomopathogène spécifique aux moustiques.

4. Produit selon la revendication 1, dans lequel l'agent d'épandage est du gypse acidifié et le gypse est acidifié en utilisant un acide di-fonctionnel.

5. Produit selon la revendication 4, dans lequel l'acide di-fonctionnel est l'acide oxalique.

6. Produit insecticide et de suppression de l'évaporation à deux composants pour utilisation sur l'eau ou sur la terre, le produit comprenant :
a) un composant de suppression de l'évaporation comprenant des particules comprenant :
i) un agent d'épandage ionisable sélectionné dans le groupe consistant en chaux hydratée et gypse acidifié ; et
ii) un alcool gras à chaîne carbonée non ramifiée contenant de 14 à 24 atomes de carbone ; et
b) un composant insecticide comprenant :
i) un agent d'épandage ionisable sélectionné dans le groupe consistant en chaux hydratée et gypse acidifié ;
ii) de l'alcool laurylique ; et
iii) un pesticide dispersé dans l'alcool laurylique ;
dans lequel les deux composants sont mélangeables avant utilisation, et l'efficacité relative insecticide et de suppression de l'évaporation des composants mélangés est ajustable en ajustant les proportions du composant insecticide et du composant de suppression de l'évaporation.

7. Procédé pour préparer une poudre insecticide et de suppression de l'évaporation, comprenant les étapes de :
a) fourniture de particules de suppression de l'évaporation comprenant :
i) un agent d'épandage ionisable sélectionné dans le groupe consistant en chaux hydratée et gypse acidifié ; et
ii) un alcool gras à chaîne carbonée non ramifiée contenant de 14 à 24 atomes de carbone ;
b) disperser un pesticide dans de l'alcool laurylique ;
c) mélanger les particules avec l'alcool laurylique contenant le pesticide, sans utiliser d'eau comme agent de mélange.

8. Procédé selon la revendication 7, comprenant en outre l'étape, avant l'étape de mélange des particules avec l'alcool laurylique contenant le pesticide, de mélange de l'alcool laurylique contenant le pesticide avec un agent d'épandage ionisable sélectionné dans le groupe consistant en chaux hydratée et gypse acidifié, sans, utiliser d'eau comme agent de mélange, grâce à quoi l'étape de mélange des particules avec l'alcool laurylique contenant le pesticide comprend le mélange des particules avec l'alcool laurylique contenant le pesticide et l'agent d'épandage ionisable mélangés.

9. Procédé pour obtenir des effets à la fois insecticides et de suppression de l'évaporation sur la terre ou sur l'eau, le procédé comprenant :
l'application sur la surface de la terre ou de l'eau d'une poudre comprenant :
a) des particules de suppression de l'évaporation comprenant :
i) un agent d'épandage ionisable sélectionné dans le groupe consistant en chaux hydratée et gypse acidifié ; et
ii) un alcool gras à chaîne carbonée non ramifiée contenant de 14 à 24 atomes de carbone ;
b) de l'alcool laurylique ; et
c) un pesticide dispersé dans l'alcool laur ylique ;
dans lequel les particules et l'alcool laurylique contenant le pesticide sont mélangés l'un avec l'autre.
